(19) Europäisches Patentamt
European Patent Office
Office européen des brevets

(11) **EP 1 429 216 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(51) Int Cl.:
*G05B 19/41* *(2006.01)*

(21) Anmeldenummer: **04002542.1**

(22) Anmeldetag: **07.11.2002**

(54) **Verfahren zur Darstellung, Untersuchung und Optimierung einer Oberflächengüte anhand von CNC-Programmdaten**

Method for display and examination and optimisation of a surface quality on the basis of CNC program data

Méthode pour la représentation, l'analyse et l'optimisation de la qualité d'une surface en fonction des données d'un programme pour machine-outil

(84) Benannte Vertragsstaaten:
**DE FR GB**

(30) Priorität: **26.11.2001 DE 10157964**

(43) Veröffentlichungstag der Anmeldung:
**16.06.2004 Patentblatt 2004/25**

(62) Dokumentnummer(n) der früheren Anmeldung(en) nach Art. 76 EPÜ:
**02024841.5 / 1 315 058**

(73) Patentinhaber: **SIEMENS AKTIENGESELLSCHAFT 80333 München (DE)**

(72) Erfinder: **Haupt, Alexander 97447 Frankenwinheim (DE)**

(56) Entgegenhaltungen:
**EP-A- 0 276 312       EP-A- 0 335 984**
**US-A- 4 945 487**

EP 1 429 216 B1

**Beschreibung**

Die Erfindung betrifft ein Verfahren zur Darstellung und/oder Untersuchung einer Oberflächengüte eines zu fertigenden Werkstückes anhand von zur Bearbeitung dienenden CNC-Programmdaten, wobei diese Programmdaten eine oberflächenbeschreibende Punktmenge umfassen, die Bahnpunkte von Raumkurven beschreibt, sowie ein darauf aufbauendes Verfahren zur Optimierung einer Oberflächengüte.

In den vergangenen Jahren zeigt sich eine deutliche Verbreitung der Hochgeschwindigkeits-Bearbeitung (kurz HSC = High Speed Cutting) beim Fräsen. Die Entwicklung neuer Technologien wie Hochfrequenzspindeln, modernen Schneidstoffen und hoch dynamischen, digitalen Vorschubantrieben bei numerisch gesteuerten Werkzeugmaschinen und Robotern führen mehr und mehr zum Einsatz der HSC-Bearbeitung.

Insbesondere im Werkzeug- und Formenbau erhält man gegenüber konventioneller Werkstoffbearbeitung dabei wesentliche Vorteile wie eine Verringerung der Bearbeitungszeit, der Fertigungskosten und der Durchlaufzeiten.

Die hohe Präzision moderner HSC-Anlagen könnte auch den Verzicht auf manuelle Nachbearbeitung insbesondere beim Fräsen von Freiformflächen erreichen.

Freiformflächen sind räumliche meist gewölbte Oberflächen, wie sie beispielsweise der Kotflügel eines Autos oder eine Turbinenschaufel darstellen. Das Fräsen dieser Werkstücke stellt im allgemeinen sehr hohe Anforderungen an Maßgenauigkeit und Oberflächengüte.

Der Einsatz der HSC-Verfahren kann jedoch bei einigen Anwendungen zu Problemen führen. Im Formenbau beispielsweise treten Mängel auf, bei denen die Einhaltung der Oberflächengüte nicht mehr gewährleistet ist. Die präzisen, hochdynamischen Antriebe der HSC-Maschinen scheinen dabei Fehler gegenüber konventionellen Antrieben zu verursachen.

Die Ursache könnte im Vergleich zweier Werkstücke, die auf unterschiedlichen Maschinen gefräst wurden, schnell gefunden sein. Die Anlage, die schlechte Oberflächenqualitäten erzeugt, müsste demnach Fehler bei der Verarbeitung aufweisen. Leider lässt sich dieses Verhalten nicht generell feststellen. Es gibt offenbar bestimmte Faktoren, die durch unterschiedliche Datenverarbeitungs- oder Bauweisen der Bearbeitungsmaschinen beeinflusst werden.

Ältere, weniger dynamische Antriebe reagieren eher träge auf die Führungsgrößen (Antriebssteuergrößen). Dadurch werden kleine Unregelmäßigkeiten oder Ungenauigkeiten der Führungsgrößen verschliffen. Die Folge sind sehr weiche, homogene Oberflächenstrukturen, die jedoch größere Maßtoleranzen aufweisen können (Verschleifung).

Die HSC-Bearbeitung mit ihren präzisen, hochdynamischen Antrieben kann jedoch die Führungsgrößen exakter umzusetzen. Zunehmend werden damit auch kleine Ungenauigkeiten sichtbar, die früher verschliffen wurden. Die Folge sind rauhe, inhomogene (hart gezeichnete) Oberflächenstrukturen.

Absolut gesehen kann diese Bearbeitung eine höhere Genauigkeit erreichen, doch erkauft man sich mitunter intolerable Oberflächenqualitäten.

Die vorliegende Erfindung leistet einen Beitrag, die Vorteile der HSC-Bearbeitung mit den Qualitäten herkömmlicher Bearbeitung zu vereinen. Dafür werden Ursachen für die unzureichende Qualität der HSC-Bearbeitung gefunden und Verbesserungsmöglichkeiten geschaffen.

Der Weg vom virtuellen Modell bis zum gefrästen Werkstück wird im Folgenden zur besseren Veranschaulichung der Problematik als Prozesskette beschrieben. Diese Prozesskette ist eine lineare Abfolge einzelner entkoppelter Prozessschritte. Es gilt also, die Ursachen für die ungenügenden Oberflächenqualitäten innerhalb der gesamten Prozesskette zu finden.

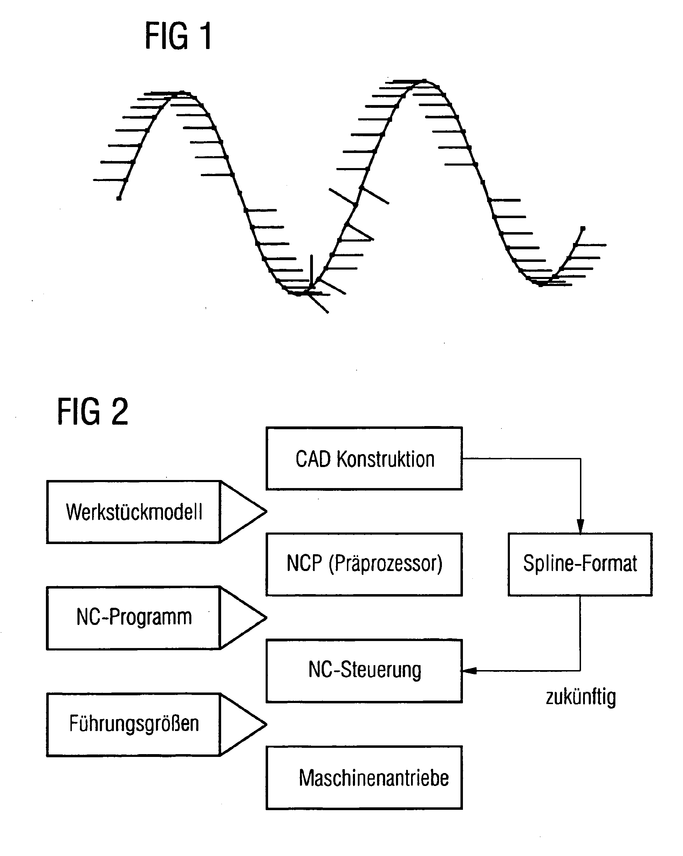

Vereinfacht lässt sich die Prozesskette in vier große Hauptbereiche einteilen. Die FIG 2 zeigt eine solche vereinfachte Prozesskette.

Innerhalb der Prozesskette gibt es drei markante Punkte (CAD-Modell, NC-Daten, Führungsgrößen). Die Analyse der NC-Eingangsdaten (NC-Programm) ist Gegenstand der vorliegenden Erfindung.

Bis auf ganz wenige Spezialfälle wird heute ausschließlich die in FIG 2 gezeigte Prozesskette mit zwei Bearbeitungswegen verwendet (CAD-File → NC-Daten → NC). Diese Verarbeitung erfolgt in der Regel mittels Linearsätzen. Einige Steuerungshersteller sind allerdings schon seit einigen Jahren in der Lage, splinebasierte Werkstückmodelle ohne Umwandlung in Linearsätze zu verarbeiten. In Zukunft könnte der Umwandlungsschritt entfallen (indem die CAD-Daten ohne Umwandlung in der NC verarbeitet werden können). Da ein Zwischenschritt entfällt oder zumindest stark vereinfacht wird, reduzieren sich mögliche Umwandlungsfehler. Bis dahin ist man allerdings aus Gründen der Kompatibilität an die herkömmliche Verfahrensweise gebunden.

Durch gezielte Maßnahmen an den Führungsgrößen kann man die Oberflächenqualität zwar verbessern, aber diese Manipulationen führen entweder zu längeren Bearbeitungszeiten oder es treten neue Fehler statt der alten Fehler auf.

Der Aufwand zur Optimierung der Führungsgrößen ist zudem aufgrund der hohen Komplexität der Regelstrecke recht hoch. Eine Analyse der NC-Eingangsdaten (Werkstückdaten) ist damit der nächste Schritt zur Fehlereingrenzung. Die Erkennung der Fehler ist der erste Schritt zu deren Beseitigung.

Aus der europäischen Patentschrift EP 0 276 312 A1 ist ein Verfahren zur Bildung von MC-Daten, die eine Abweichungsbahn eines Bearbeitungswerkzeugs in Bezug auf eine zu bearbeitende drei-dimensionale gekrümmte Oberfläche bestimmen, dass ein Berechnungsverfahren für einen Normalvektor umfasst, bekannt.

Herkömmlich ist es nur bekannt, eine Oberflächengüte durch eine Oberflächenvernetzung der oberflächenbeschreibenden Punktmenge darzustellen und anhand dieser Darstellung zu beurteilen. Mit der erhaltenen Ansicht ist eine Einschätzung der Oberflächengüte jedoch nur sehr eingeschränkt möglich, weil die Vielzahl der zu überblickenden Anzahl von Qualitätsmerkmalen von komplexen CNC-Programmdaten auf diese Weise nicht erkennbar sind.

Aufgabe der vorliegenden Erfindung ist es daher, ein verbessertes Verfahren zu schaffen, mit dem die Oberflächengüte eines noch zu fertigenden Werkstücks anhand von CNC-Programmdaten noch vor der eigentlichen Fertigung analysiert werden kann und mögliche Fehlerstellen bzw. Ungenauigkeiten schnell und einfach erkannt werden. Im Rahmen dieser Aufgabe soll weiter eine effektive Methode zur Visualisierung der ermittelten Oberflächengüte angegeben werden.

Diese Aufgabe wird durch ein Verfahren der eingangs genannten Art gelöst, indem für eine Mehrzahl von benachbarten Bahnpunkten die zugehörigen Normalenvektoren ermittelt und dargestellt werden und wobei Bereiche hoher Oberflächengüte durch im wesentlichen in die gleiche Richtung gerichtete Normalenvektoren signalisiert werden, wohingegen Ungenauigkeiten der resultierenden Oberfläche durch in abweichende Richtungen zeigende Normalenvektoren signalisiert werden, wobei ein Normalenvektor ermittelt wird, indem aus drei aufeinanderfolgenden Bahnpunkten zwei Vektoren gebildet werden und der Normalenvektor eines mittleren Bahnpunktes jeweils als Vektorprodukt senkrecht auf einer durch die beiden Vektoren aufgespannten Ebene angeordnet wird, wobei die Orientierung des Normalenvektors zu einer Seite der Ebene in Abhängigkeit von der Krümmungsrichtung der Raumkurve im zugehörigen Bahnpunkt gewählt wird.

Die Normalenvektoren werden ermittelt, indem aus drei aufeinanderfolgenden Bahnpunkten zwei Vektoren gebildet werden und der Normalenvektor eines mittleren Bahnpunktes jeweils als Vektorprodukt senkrecht auf einer durch die beiden Vektoren aufgespannten Ebene angeordnet wird, wobei die Orientierung des Normalenvektors zu einer Seite der Ebene in Abhängigkeit von der Krümmungsrichtung der Raumkurve im zugehörigen Bahnpunkt gewählt wird.

Gemäß der vorliegenden Erfindung können anstelle der Normalenvektoren auch sogenannte Winkelhalbierenden-Vektoren eingesetzt werden, indem für eine Mehrzahl von benachbarten Bahnpunkten die zugehörigen Winkelhalbierenden-Vektoren ermittelt und dargestellt werden und wobei Bereiche hoher Oberflächengüte durch im wesentlichen in die gleiche Richtung gerichtete Winkelhalbierenden-Vektoren signalisiert werden, wohingegen Ungenauigkeiten der resultierenden Oberfläche durch in abweichende Richtungen zeigende Winkelhalbierenden-Vektoren signalisiert werden, wobei ein Winkelhalbierenden-Vektor ermittelt wird, indem aus drei aufeinanderfolgenden Bahnpunkten zwei Vektoren gebildet werden und der Normalenvektor eines mittleren Bahnpunktes jeweils als Vektorprodukt senkrecht auf einer durch die beiden Vektoren aufgespannten Ebene angeordnet wird und dieser Normalenvektor um einen Winkel von 90 Grad in die Ebene gedreht wird, so dass der Winkelhalbierenden-Vektor in halbem Winkel zwischen den beiden Vektoren liegt.

Die Winkelhalbierenden-Vektoren werden ermittelt, indem aus drei aufeinanderfolgenden Bahnpunkten zwei Vektoren gebildet werden und der Normalenvektor eines mittleren Bahnpunktes jeweils als Vektorprodukt senkrecht auf einer durch die beiden Vektoren aufgespannten Ebene angeordnet wird und dieser Normalenvektor um einen Winkel von 90 Grad in die Ebene gedreht wird, so dass der Winkelhalbierenden-Vektor in halbem Winkel zwischen den beiden Vektoren liegt.

Es erweist sich als vorteilhaft, wenn alle ermittelten Normalenvektoren der Bahnpunkte auf einen Punkt zentriert dargestellt, wobei anhand der Verteilung der Normalenvektoren Rückschlüsse auf die Oberflächengüte gezogen werden, indem Bereiche hoher Oberflächengüte durch im wesentlichen deckungsgleiche Normalenvektoren signalisiert werden, wohingegen Ungenauigkeiten der resultierenden Oberfläche durch Streuungen in abweichende Richtungen zeigender Normalenvektoren signalisiert werden.

Dabei hat es sich als vorteilhaft erwiesen, wenn die Endpunkte der auf einen Anfangspunkt zentriert dargestellten Normalenvektoren gleicher Länge im dreidimensionalen Raum auf eine Kugelfläche mit dem Radius eines Normalenvektors abgebildet werden und Bereiche mit Ungenauigkeiten der resultierenden Oberfläche durch Bereiche mit einer Vielzahl solcher Endpunkte signalisiert werden.

Weiterhin erweist es sich als vorteilhaft, dass jeweils Winkel zwischen ermittelten Normalenvektoren benachbarter Bahnpunkte bestimmt und Bereiche hoher Oberflächengüte durch vergleichsweise kleine Winkel zwischen benachbarten Normalenvektoren signalisiert werden, wohingegen Ungenauigkeiten der resultierenden Oberfläche durch vergleichsweise große Winkel und/oder sprunghafte Änderungen benachbarter Winkel signalisiert werden.

Besonders günstig ist es dabei, wenn eine Toleranzschwelle vorgegeben wird, die vorzugsweise zwischen 10 und 25 Grad gewählt ist, wobei unter dieser Schwelle liegende Winkel zwischen benachbarten Normalenvektoren als kleine Winkel und über dieser Schwelle liegende Winkel als vergleichsweise große Winkel angenommen werden.

Im Hinblick auf eine besonders gute Visualisierung hat es sich dabei als günstig erwiesen, wenn die zu benachbarten Normalenvektoren mit vergleichsweise großem Winkel zugehörigen Bahnpunkte markiert dargestellt werden.

Weiter lässt sich eine Visualisierung der gemäß der Erfindung analysierten Oberflächengüte weiter verbessern, indem ein Normalenvektor einseitig oder beidseitig der Bahnachse entlang des Bahnverlaufs bis zu einem der benachbarten Bahnpunkte flächenhaft verlängert dargestellt wird. Durch die so entstehenden Pseudo-Oberflächen erhält der Betrachter eine verbesserte Sicht auf die Lage der zur Beurteilung herangezogenen Normalenvektoren oder Winkelhalbierenden-Vektoren.

Eine weitere Verbesserung der Visualisierung erhält man, wenn Bereiche von Ungenauigkeiten der resultierenden Oberfläche durch Einfärbung der jeweiligen signalisierenden Punkte oder Linien oder Flächen markiert werden.

Neben der im vorangehenden aufgezeigten erfindungsgemäßen Methode zur Analyse der NC-Eingangsdaten von beispielsweise Freiformflächen, werden mit der Erfindung darauf aufbauend neben einer Erkennung von Fehlern (mathematisch analysiert und visualisiert) auch Möglichkeiten einer Fehlerkorrektur geschaffen.

Dies wird durch ein Verfahren zur Untersuchung und Optimierung der Oberflächengüte erreicht, indem diese Oberfläche erfindungsgemäß analysiert wird und die zugrunde liegenden CNC-Programmdaten solange manipuliert werden, bis die meisten oder alle Normalenvektoren oder Winkelhalbierenden-Vektoren auf der Raumbahn in gleicher Richtung liegen.

Vorzugsweise erfolgt eine Manipulation der CNC-Programmdaten durch Veränderung der ursprünglichen Datenpunkte. Alternativ oder ergänzend dazu kann eine Manipulation der CNC-Programmdaten auch durch Generierung zusätzlicher Datenpunkte erfolgen, insbesondere durch eine Neuabtastung des Raumbahnverlaufs.

Eine Veränderung der ursprünglichen Datenpunkte erfolgt insbesondere durch eine Glättung des Raumbahnverlaufs, z.B. durch lineare Regression über mehrere benachbarte Bahnpunkte, sofern die Raumkurve auf wenigstens eine Ebene reduzierbar ist. Alternativ kann eine Glättung des Raumbahnverlaufs unter diesen Bedingungen auch durch einen zweidimensionalen Ausgleichsspline über mehrere benachbarte Bahnpunkte erfolgen.

Andernfalls kann eine Glättung des Raumbahnverlaufs durch einen dreidimensionalen Ausgleichsspline über mehrere benachbarte Bahnpunkte erfolgen.

Es hat sich dabei als günstig herausgestellt, wenn erforderlichenfalls eine Erhöhung der Datenauflösung der Bahnpunkte einer Raumkurve erfolgt.

Durch die Erfindung werden unter anderem die folgenden Vorteile erreicht:

- sehr einfache und übersichtliche Darstellung von möglichen Fehlerstellen in Teileprogrammen
- Möglichkeit eines einfachen Vergleichs von einem Original und einem optimierten Teileprogramm
- die Auswirkungen von Steuerungskomponenten (z.B. eines Daten-Kompressors) auf den Bahnverlauf einer Bearbeitungsmaschine und damit auf die mögliche Oberflächengüte eines Werkstücks lassen sich effektiv betrachten und vergleichen
- aufbauend auf den analysierten Fehlerstellen bzw. Ungenauigkeiten lassen sich automatisch oder manuell nach Betrachtung durch einen Bediener Optimierungen an den CNC-Programmdaten vornehmen.

Weitere Details und Vorteile der Erfindung ergeben sich anhand der im Folgenden dargestellten weiteren Informationen und Ausführungsbeispiele sowie in Verbindung mit den Figuren. Es zeigen jeweils in prinzipieller Darstellung:

FIG 1    die Lage der Normalenvektoren am Beispiel eines mit Fehlern behafteten Sinusverlaufs aus Bahnpunkten als Raumkurve,

FIG 2    eine Prinzipskizze einer Prozesskette mit zwei Bearbeitungswegen,

FIG 3    eine Bahndarstellung mit mehreren Bahnpunkten,

FIG 4    die Bildung von zwei Vektoren aus drei Bahnpunkten,

FIG 5    die geometrische Ermittlung eines Normalenvektors,

FIG 6    die Lage der Normalenvektoren am Beispiel eines idealen Sinusverlaufs aus Bahnpunkten als Raumkurve,

FIG 7    die geometrische Ermittlung eines Winkelhalbierenden-Vektors,

FIG 8    die Lage der winkelhalbierenden Vektoren am Beispiel eines idealen Sinusverlaufs aus Bahnpunkten als Raumkurve,

FIG 9    die Lage der winkelhalbierenden Vektoren am Beispiel eines mit Fehlern behafteten Sinusverlaufs aus Bahnpunkten als Raumkurve,

FIG 10    eine beispielhafte Bearbeitungsbahn mit den ermittelten Normalenvektoren,

FIG 11    die gleiche Bearbeitungsbahn wie in FIG 10 mit den ermittelten winkelhalbierenden Vektoren,

FIG 12    eine weitere beispielhafte Bearbeitungsbahn mit den ermittelten Normalenvektoren,

FIG 13    die gleiche Bearbeitungsbahn wie in FIG 12 mit den ermittelten winkelhalbierenden Vektoren,

FIG 14    ein Bahnausschnitt mit drei Punkten und drei Normalenvektoren,

FIG 15    der Bahnausschnitt mit drei Punkten aus FIG 14 mit Pseudo-Oberflächendarstellung der Bahn, je nach Lage dunkler oder heller,

FIG 16     eine Veranschaulichung der Zentrierung von drei exemplarischen Normalenvektoren,

FIG 17     die Lage der Normalenvektoren am Bahnverlauf und deren zentrierte Darstellung am Beispiel eines mit Fehlern behafteten Sinusverlaufs aus Bahnpunkten als Raumkurve,

FIG 18     das Resultat einer zentrierten Darstellung von Normalenvektoren für ein NC-Programm, bei dem die Normalenvektoren zum Teil starken Streuungen unterliegen,

FIG 19     eine Bestimmung der Winkelabweichung zwischen drei exemplarischen Normalenvektoren,

FIG 20     ein Beispiel eines schlechten Bahnverlaufs mit permanentem Krümmungsrichtungswechsel erkennbar anhand von alternierenden Normalenvektoren,

FIG 21     eine fehlerhafte Lage eines Punktes bei fester Auflösung und max. 1$\mu$m großem Fehler,

FIG 22     der Zusammenhang zwischen Bahnlänge und festem Fehler,

FIG 23     ein beispielhafter Bahnverlauf in XY-Ebene,

FIG 24     ein beispielhafter schräger Bahnverlauf,

FIG 25     eine Punktdarstellung der Auswirkungen zu geringer Auflösungen auf schräg verlaufende Bahnen,

FIG 26     eine Liniendarstellung der Auswirkungen zu geringer Auflösungen auf schräg verlaufende Bahnen,

FIG 27     ein Beispiel einer linearen Glättung von Bahnpunkten,

FIG 28     ein Beispiel eines Splineverlaufs und damit geglätteter Punkte.

Für die Analyse und Beurteilung von dreidimensionalen Werkstückprogrammen ist eine Betrachtung der geometrischen Eigenschaften der NC-Daten nötig. Die mathematische Grundlage dafür liegt in der Konvertierung der NC-Daten in vektorielle Größen wie z.B. Normalenvektoren.

Die Daten in den NC-Programmen sind bei dreidimensionalen Werkstücken als Wertetriplets hinterlegt (X, Y, Z-Werte). Diese Wertetriplets stellen eine oberflächenbeschreibende Punktmenge dar.

Ausschnitt aus einem NC-Programm:

... N10 X0.000 Y-2.350 Z23.569
N20 X5.000 Z25.391
N30 X9.560 Y0.368 Z33.624
N40 Y1.893 Z48.657
...

Die Zahl nach "N" ist lediglich eine fortlaufende Satznummer. Im Formenbau sind möglichst glatte Oberflächenstrukturen erwünscht. Daraus ergeben sich einige Vorbedingungen an die Steuerung und die NC-Daten: z.B.

- möglichst konstante Bahngeschwindigkeit
- sanfte Beschleunigungsverläufe
- geringe Beschleunigungsänderungen
- möglichst monotone Bahnverläufe.

Für die Analyse der NC-Daten ist die Betrachtung der Fräsbahnen mittels geeigneter vektorieller Größen sehr hilfreich. Jeder Datenpunkt wird in einem dreidimensionalen Vektor dargestellt. Die x, y und z-Werte entsprechen den skalaren Koordinaten aus der NC-Datei.

Für viele Berechnungen benötigt man den Abstand zwischen zwei benachbarten Punkten. In einer Ebene lässt sich der Abstand zweier Punkte nach der Pythagoras-Formel berechnen.

$$c^2 = a^2 + b^2 \, ,$$

$$a = x_{i+1} - x_i \qquad b = y_{i+1} - y_i \, .$$

Also ergibt sich der Abstand zweier Punkte in der Ebene:

$$s_{i,i+1} = \left| P_{i+1}(x,y) - P_i(x,y) \right| = \sqrt{\left(x_{i+1} - x_i\right)^2 + \left(y_{i+1} - y_i\right)^2} \; .$$

Im Raum ergibt sich der Abstand wie folgt

$$s_{i,i+1} = \left| P_{i+1}(x,y,z) - P_i(x,y,z) \right| = \sqrt{(x_{i+1} - x_i)^2 + (y_{i+1} - y_i)^2 + (z_{i+1} - z_i)^2}\ .$$

Für die Beurteilung eines Datenfiles ist der Normalenvektor erfindungsgemäß eine Schlüsselkomponente. Dieser ist das Vektorprodukt aus zwei linear unabhängigen Vektoren. Der Normalenvektor steht senkrecht auf der Ebene, die die beiden Vektoren aufspannen.

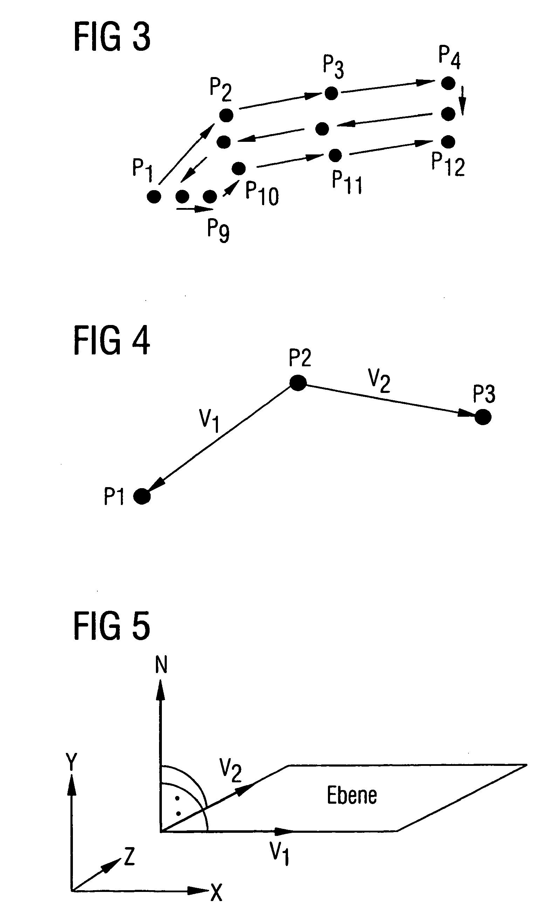

Zur Erzeugung eines Normalenvektors bildet man zunächst aus drei aufeinanderfolgenden Bahnpunkten P1...P3 zwei Vektoren V1, V2 (vgl. FIG 4).

Diese beiden Vektoren werden nach folgender Gleichung miteinander multipliziert (Vektorprodukt):

$$\vec{N} = \begin{pmatrix} n_x \\ n_y \\ n_z \end{pmatrix} = \vec{A} \times \vec{B} = \begin{pmatrix} a_y b_z - a_z b_y \\ a_z b_x - a_x b_z \\ a_x b_y - a_y b_x \end{pmatrix} \tag{5}$$

$$\vec{N} = \vec{V}_i \times \vec{V}_{i+1} = (P_{i-1} - P_i) \times (P_{i+1} - P_i) \tag{6}$$

Die Darstellung gemäß FIG 5 beschreibt diesen Zusammenhang auf geometrische Weise. Die Richtung der ermittelten Normalenvektoren kann 180˚ gedreht liegen, je nachdem, ob es sich um ein links- oder rechtshändiges System handelt. Für Analysemethoden ist diese Spiegelung ohne Bedeutung, so lange man sich auf ein System festlegt.

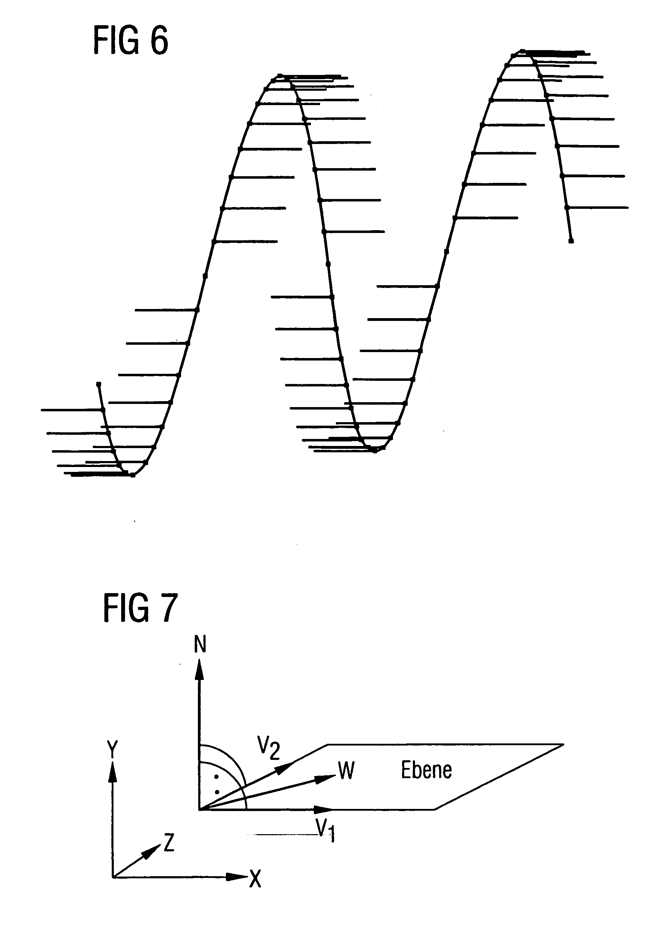

Die FIG 6 erläutert die Lage der Normalenvektoren am Beispiel eines idealen Sinusverlaufs aus Bahnpunkten als Raumkurve.

Der Sinusverlauf wird durch einzelne Punkte repräsentiert. Die Punkte sind durch Linien verbunden. Bis auf 3 Ausnahmen kann jedem Punkt ein Normalenvektor zugeordnet werden. Ausnahmefall 1 und 2 sind der Anfangs- und Endpunkt der Kurve, dem kein Normalenvektor zugeordnet werden kann. Ausnahmefall 3 ist eine Gerade, die aus 3 Punkten besteht. Der Normalenvektor ist hier undefiniert, da die Vektoren $\vec{V}_i$ und $\vec{V}_{i+1}$ kollinear (linear abhängig) sind.

Wie man an der Ausrichtung der Vektoren erkennen kann, liegt hier ein Sonderfall vor. Diese dreidimensionale Sinuskurve liegt offensichtlich in einer Ebene. Alle Normalenvektoren haben die selbe Ausrichtung. Je nach Krümmungsrichtung der Kurve sind die Normalenvektoren lediglich um 180˚ gedreht.

Sind alle Normalenvektoren kollinear, so liegt die Punktmenge in einer Ebene. Der Umkehrschluss daraus lautet: Soll eine Punktmenge in einer Ebene liegen, so müssen alle Normalenvektoren kollinear sein. Anhand von 180˚ Sprüngen lassen sich Richtungswechsel im Achs- oder Bahnverlauf sehr einfach aufspüren. Auf diese für die Erfindung wesentlichen Zusammenhänge wird nachfolgend aufgrund dieser grundlegenden Bedeutung der Normalenvektoren mehrfach Bezug genommen.

In der folgenden Darstellung gemäß FIG 1 wurden lediglich zwei Werte der Sinuskurve geringfügig geändert. Die daraus resultierenden Veränderungen der Normalenvektoren sind in FIG 1 deutlich sichtbar. Dieser Sinusverlauf hat offensichtlich zwei fehlerbehaftete Punkte. Da einem Normalenvektor drei Punkte als Berechnungsgrundlage dienen, werden umgekehrt drei Normalenvektoren von einem Punkt beeinflusst.

Eine Alternative zu den Normalenvektoren stellen die sogenannten Winkelhalbierenden-Vektoren dar. Ein winkelhalbierende Vektor W ist ein um 90˚ gedrehter Normalenvektor N. Der Name steht für die Eigenschaft des Vektors im halben Winkel zwischen den Richtungsvektoren zu liegen. Er dient lediglich der schnelleren visuellen Beurteilung einer Kurve, da Richtungs- und winkelhalbierender Vektor in einer Ebene liegen. Die FIG 7 zeigt diesen Zusammenhang auf geometrische Weise.

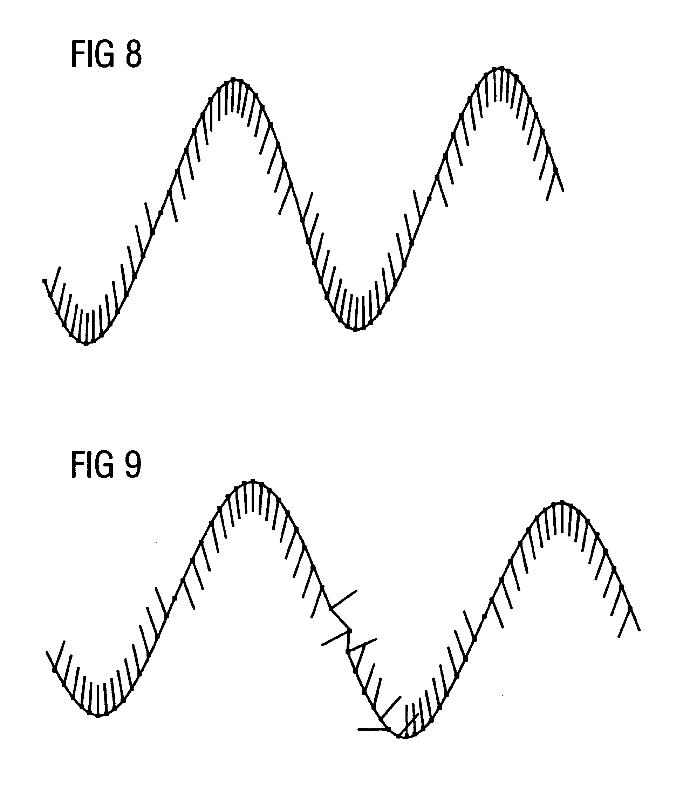

Des weiteren lässt sich die Krümmungsrichtung einer Kurve besser darstellen, wie man leicht anhand von FIG 8 erkennt.

Zur Berechnung könnte man den Normalenvektor heranziehen und ihn mittels Rotation um 90˚ in die Ebene der Richtungsvektoren legen. Der Winkel zwischen zwei Vektoren berechnet sich wie folgt:

$$\cos\varphi = \frac{\bar{A}_1 \cdot \bar{B}_2}{|\bar{A}_1| \cdot |\bar{B}_2|} = \frac{a_x b_x + a_y b_y + a_z b_z}{\sqrt{(a_x^2 + a_y^2 + a_z^2)(b_x^2 + b_y^2 + b_z^2)}} \qquad (7)$$

Da aber nur die Richtung und nicht die Länge der Vektoren entscheidend ist, erhält man den winkelhalbierenden Vektor einfacher durch eine Normierung.

Beide Richtungsvektoren werden auf einheitliche Länge normiert. Im einfachsten Fall werden sie zu Einheitsvektoren. Subtrahiert man nun beide Einheitsvektoren, so erhält man den winkelhalbierenden Vektor aus der Subtraktion beider Vektoren.

$$\vec{W} = \bar{e}_A - \bar{e}_B = \frac{\bar{A}}{|\bar{A}|} - \frac{\bar{B}}{|\bar{B}|} = \frac{\bar{A}}{\sqrt{a_x^2 + a_y^2 + a_z^2}} - \frac{\bar{B}}{\sqrt{b_x^2 + b_y^2 + b_z^2}} \qquad (8)$$

Liegt die Punktmenge in einer Ebene, so liegen auch alle winkelhalbierenden Vektoren in dieser Ebene. Im Unterschied zum Normalenvektor liegen Kurvenstücke und winkelhalbierende Vektoren in einer Ebene.

Die Darstellung gemäß FIG 8 zeigt die Lage der winkelhalbierenden Vektoren einer Sinuskurve im Raum. Deutlich erkennbar ist die Ausrichtung der Vektoren in Richtung der jeweiligen Krümmungsrichtung der Kurve.

In FIG 9 sind gegenüber FIG 8 zwei Punkte verändert worden. Die betroffenen Vektoren kippen aus der Ebene der Sinuskurve heraus. Aufgrund der Perspektive scheinen diese Vektoren länger zu sein. Alle Vektoren besitzen aber Einheitslänge.

Die winkelhalbierenden Vektoren sind die Winkelhalbierende zwischen zwei Bahnvektoren. Sie entsprechen 90˚ gedrehten Normalenvektoren, liegen aber in der Bahnebene. Ihre Lage lässt das Jittern in der Bahnebene deutlicher erkennen. Die Zwischenlagevektoren liegen immer in der Ebene, die von 2 Vektoren aufgespannt wird. Der Sinusverlauf liegt selbst auch in einer Ebene, so dass alle ZL-Vektoren in einer Ebene liegen. Treten nun Fehler im Bahnverlauf auf, so kippen einige ZL-Vektoren aus der Ebene und lassen sich graphisch sehr einfach aufspüren (besser sichtbar als Normalenvektoren).

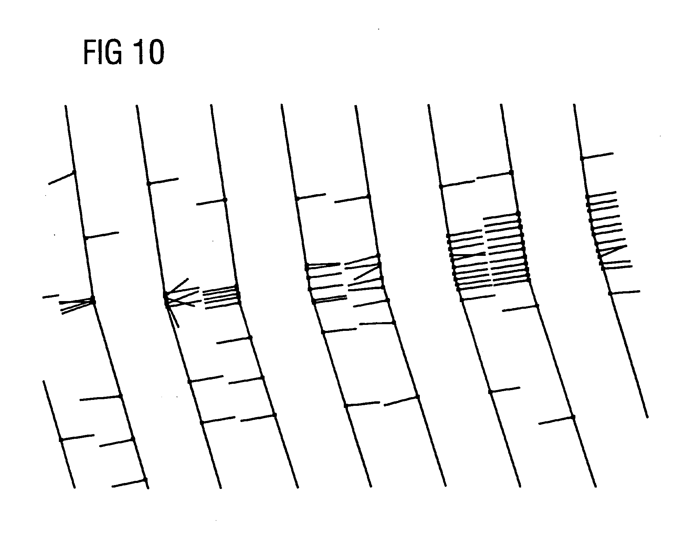

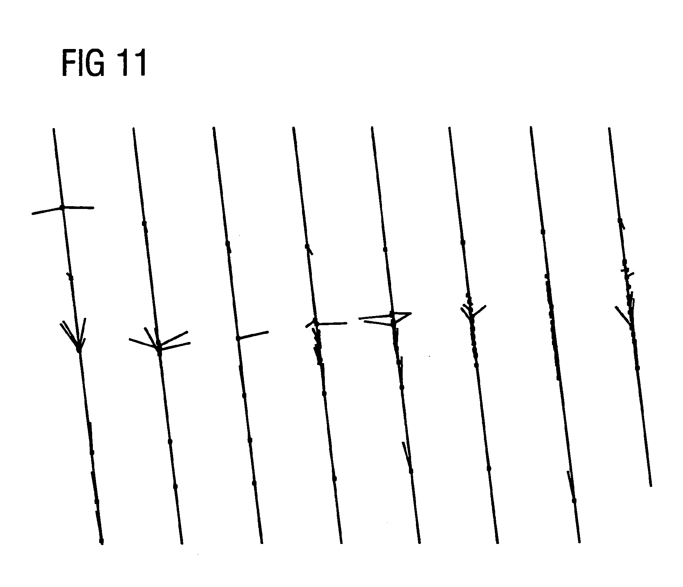

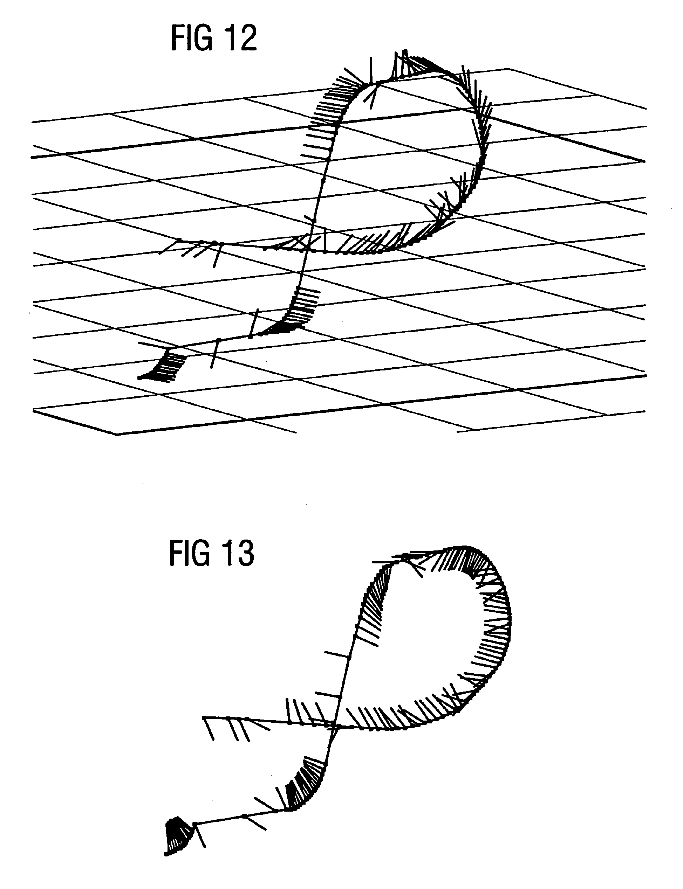

Die Krümmungsrichtungen der Bahn lassen sich einfacher mit den winkelhalbierenden Vektoren W herauslesen, was anhand eines beispielhaften Vergleichs der Darstellungen von Normalenvektoren und Winkelhalbierenden-Vektoren in FIG 10 (Normalenvektoren) und FIG 11 (Winkelhalbierenden-Vektoren) sowie in FIG 12 (Normalenvektoren) und FIG 13 (Winkelhalbierenden-Vektoren) gut graphisch nachvollziehbar ist.

Mit Hilfe der Normalenvektoren ist es außerdem auch möglich eine Art Oberfläche zu generieren.

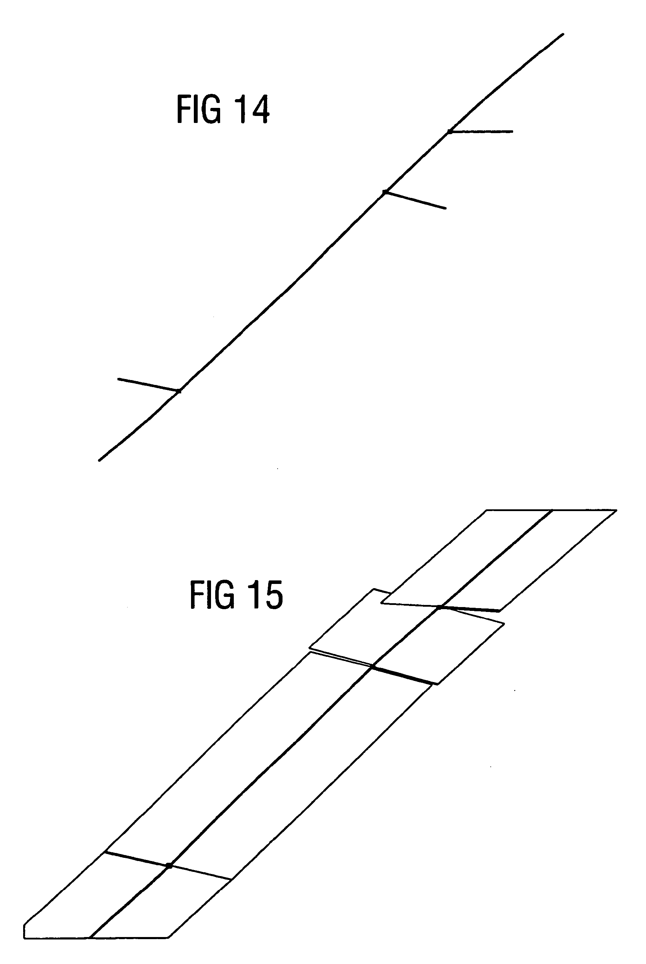

Dabei werden die Normalenvektoren beidseitig der Bahnachse verlängert und praktisch entlang des Bahnverlaufs bis zum nächsten Punkt flächenhaft verlängert. Das Resultat ist ein kleines Flächenstück entlang des Bahnverlaufes. Die FIG 14 zeigt einen Bahnausschnitt mit drei Punkten und drei Normalenvektoren, während die FIG 15 eine so generierte Pseudo-Oberflächendarstellung der Bahn zeigt, die je nach Lage dunkler oder heller eingefärbt ist. Damit ist eine wesentliche Optimierung einer Visualisierung der Oberflächengüte möglich.

Durch diese Flächen bekommt man somit eine verbesserte Sicht über die Lage der Normalenvektoren. Damit lassen sich auch alle Normalenvektoren eines großen Modells nahezu vollständig betrachten (bis auf perspektivische Verdeckungen). Mit Liniendarstellungen ist die Betrachtung einer großen Zahl von Normalenvektoren nämlich nur vergleichsweise schwer möglich.

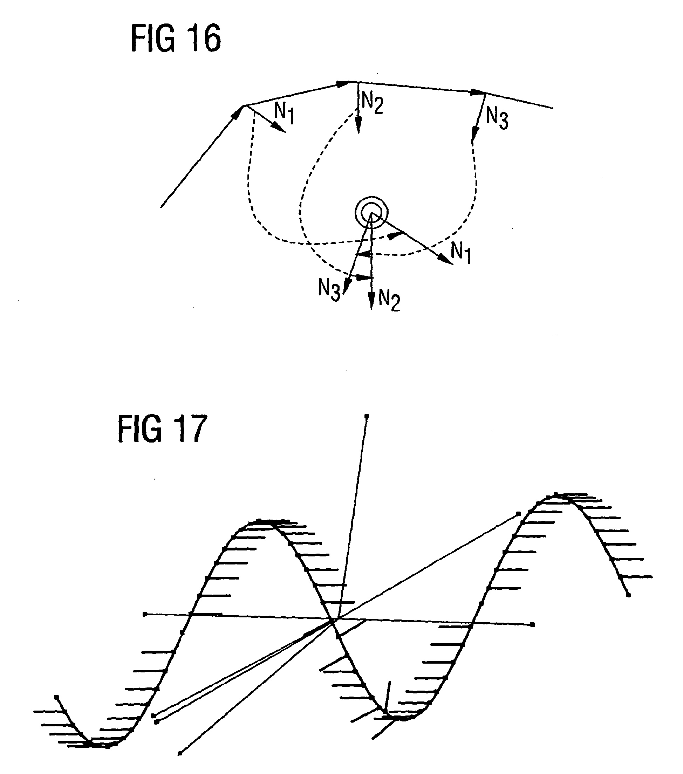

Eine weitere sehr effektive und äußerst aufschlussreiche Methode zur Beurteilung der NC-Daten ist die zentrierte Darstellung der Normalenvektoren. Die Normalenvektoren aller Punkte werden dazu auf einen Anfangspunkt gelegt und zeigen in den Raum (vgl. dazu FIG 16 zur Zentrierung von drei exemplarischen Normalenvektoren N1...N3). Durch die Zentrierung auf einen Punkt sind deckungsgleiche Normalenvektoren nicht mehr unterscheidbar. Damit lassen sich insbesondere Ausreißer, die nicht in Richtung der meisten, in der Regel "guten" Normalenvektoren liegen, gut erkennen.

Die FIG 17 veranschaulicht diese Vorgehensweise anhand eines mit Fehlern behafteten Sinusverlaufs aus Bahnpunkten als Raumkurve, wobei nun zusätzlich neben den Normalenvektoren am Bahnverlauf auch eine zentrierte Darstellung skizziert ist. Anhand der Verteilung der Normalenvektoren lassen sich Rückschlüsse auf die Genauigkeit der Daten ziehen. Damit ist eine indirekte Beurteilung der Daten möglich.

Da alle Normalenvektoren die gleiche Länge besitzen, liegen sämtliche Endpunkte auf einer Kugel.

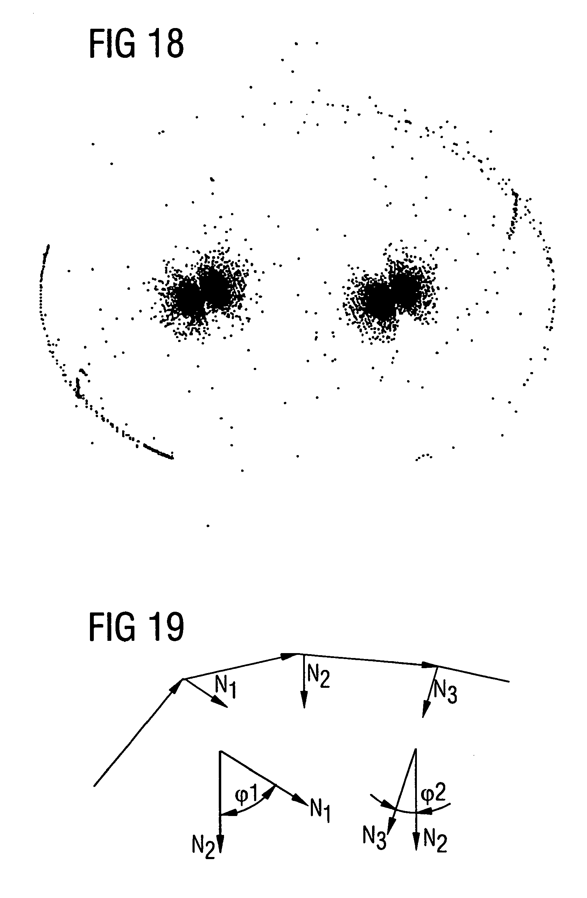

Die weitere FIG 18 zeigt beispielhaft als Grafik das Resultat einer zentrierten Darstellung von Normalenvektoren für ein NC-Programm, bei dem die Normalenvektoren zum Teil starken Streuungen unterliegen, erkennbar an den ausgeprägten Punktwolken.

Insgesamt sind folgende mögliche Ansichten der Normalenvektoren in zentrierter Darstellung vorstellbar:

- Endpunkte der Normalenvektoren liegen im Raum auf einer Kugeloberfläche
- Normalenvektoren zentriert mit Einheitslänge in Raum zeigend
- Kombinierte Darstellung der beiden vorgenannten Ansichten.

Mit Hilfe dieser Ansichten lassen sich Inseln und geometrische Strukturen erkennen, an denen man eine visuelle Beurteilung vornehmen kann. Markante Merkmale dieser Ansichten und deren Beurteilung sind in der folgenden Tabelle zusammengefasst.

| Merkmale | exakte Daten | Ungenaue/fehlerhafte Daten |
|---|---|---|
| Sichtbare Punkte | wenige Punkte sichtbar, selbst bei größeren Punktmengen | Viele Punkte sichtbar |
| Linien | wenige Linien sichtbar, viele überlappen sich | Viele, weniger überlappende Linien sichtbar |
| Punktverteilung | nur kleine Punktwolken sichtbar, | ausgeprägte Punktwolken, |
| Strukturen | scharfe, hart umrissene Strukturen | Kaum scharfe Strukturen erkennbar |
| Lage | eng begrenzt im Raum | Meist weit verteilt im Raum |

Bei sehr genauen Daten sind teilweise nur wenige Punkte bzw. Geraden zu sehen. Es gibt Eingangsdaten, bei denen tatsächlich keine 5 Punkte bzw. Linien zu sehen sind, obwohl das Programm über 150000 Datenpunkte enthält. Wie bereits erwähnt, sind hier lediglich zwei Normalenvektoren zu sehen, obwohl das NC-Programm etwa 150000 Datenpunkte enthält (und somit auch etwa 150000 Normalenvektoren). Die Richtung der Normalenvektoren ist im Idealfall identisch, so dass alle Normalenvektoren übereinander liegen, wenn die gespiegelten Normalenvektoren nicht mit eingezeichnet werden.

Diese erfindungsgemäße Methode ist sehr gut zur Beurteilung eines CNC-Datenfiles geeignet. Durch die Visualisierung lassen sich einfach Rückschlüsse auf die Güte der Eingangsdaten ziehen.

Eine weiterführende Behandlung dieser Thematik könnte darin bestehen, die Verteilung statistisch zu analysieren. Es wäre denkbar, aus dieser Analyse eine Qualitätszahl zu ermitteln.

Eine Schwierigkeit besteht darin, dass sich (bis auf Sonderfälle) absolut willkürlich verteilte Strukturen bilden. Des weiteren muss man die Anzahl der Punkte berücksichtigen. Es können einige Hundert aber durchaus auch mehrere Millionen Punkte sein.

Glatte Oberflächen erhält man überwiegend aus Daten, bei denen der Winkel zwischen zwei benachbarten Normalenvektoren nur sehr gering ist. Daraus ergibt sich die Anforderung an eine hohe Oberflächengüte, dass sich die Richtungen benachbarter Normalenvektoren nur sehr wenig ändern sollten. Treten hingegen sprunghafte Änderungen auf, so kann sich dies in einer schlechten Oberflächenqualität auswirken.

Für eine Analyse auf der Grundlage dieser Überlegungen wird erfindungsgemäß eine weitere alternative Methode geschaffen, die dazu anhand der Winkel zwischen den Normalenvektoren überprüft, in wie weit zwei aufeinanderfolgende Normalenvektoren gegeneinander verdreht sind. Hieraus lässt sich gut erkennen, ob ein Bahnverlauf die gewünschte Lage beibehält oder ob die Bahn pendelt.

Zunächst bestimmt man nun von allen Punkten die Winkelabweichung der Normalenvektoren bezüglich des nächsten Normalenvektors. Dies ist anhand von FIG 19 graphisch für drei exemplarische Normalenvektoren N1...N3 für die Winkelabweichung der Normalenvektoren gezeigt.

Im zweiten Schritt kann man dann z.B. nach Winkelabweichungen der Normalenvektoren suchen, deren Wert ein bestimmten Toleranzmaß überschreiten (beispielsweise 20˚). Die Punkte, deren Normalenvektoren dieses Kriterium erfüllen, werden dann vorzugsweise graphisch hervorgehoben.

Somit bekommt man einen Überblick über die Bahnpunkte, deren Normalenvektoren eine starke Lageabweichung gegenüber dem folgenden Normalenvektor besitzen. Diese Bereiche sind deckungsgleich mit den Unregelmäßigkeiten auf der Werkstückoberfläche. Korrekturverfahren, die diese Abweichungen verringern, müssten demzufolge auch bessere Oberflächenqualitäten erzeugen.

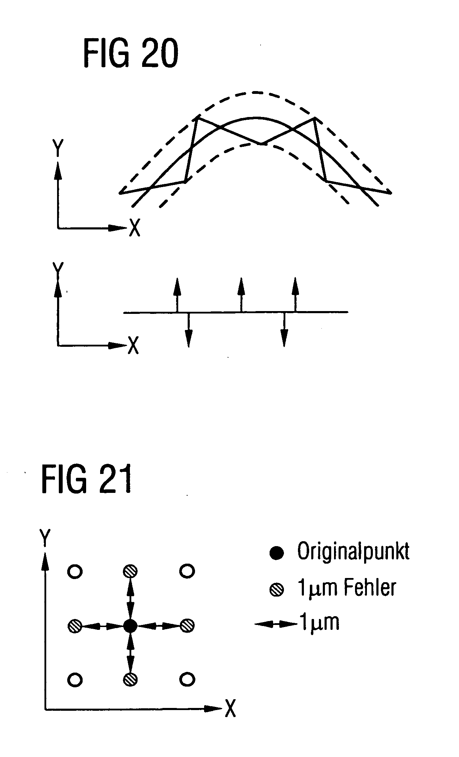

Anhand spezieller Muster von Normalenvektoren lassen sich Rückschlüsse auf den Bahnverlauf ziehen. Ein häufiges Muster sind alternierende Normalenvektoren. Dabei ist der nachfolgende Normalenvektor um etwa 180˚ zum jeweils nächsten gedreht. Die Darstellung gemäß FIG 20 zeigt dieses Beispiel eines schlechten Bahnverlaufs mit permanentem Krümmungsrichtungswechsel erkennbar anhand von alternierenden Normalenvektoren, wobei im oberen Darstellungsbereich zweidimensional in X-Y-Richtung der um einen idealen Bahnverlauf pendelnde tatsächliche Verlauf mit alternierender Krümmungsrichtung gezeigt ist. Darunter sind in X-Z-Richtung die zugehörigen ermittelten Normalenvektoren aufgetragen, woraus man deutlich einen permanenten Richtungswechsel über einem endlichen Bahnabschnitt erkennt.

Dieses Verhalten ist ein Indiz für einen permanenten Krümmungsrichtungswechsel. Dies kann besonders bei NC-Programmen mit niedriger Auflösung entstehen, da durch die Rundungsfehler der Bahnverlauf um seine Ideallinie schwankt ("Sägezahnverlauf").

Die Erkennung derartiger Muster lässt sich so erfindungsgemäß relativ einfach über die Winkel aufeinanderfolgender Normalenvektoren erreichen. Die zusätzliche Darstellung der Normalenvektoren in FIG 20 zeigt den ungewöhnlichen Bahnverlauf, wonach die Krümmung der Bahnabschnitte ständig von Punkt zu Punkt wechselt. Der Bahnverlauf pendeln förmlich um Mittelwertsbahnen. An genau diesen Stellen treten nun Unregelmäßigkeiten an den Werkstückoberflächen beim Fräsen auf. Die Vermeidung (Korrektur) derartiger Strukturen würde nun die Oberflächenqualität der Werkstücke erhöhen. Dies wird erreicht, indem die CNC-Programmdaten derart manipuliert werden, dass alle Normalenvektoren in die gleiche Richtung zeigen.

Im Folgenden sollen mögliche Ursachen für Fehlstellen oder Ungenauigkeiten bei einer CNC-Bearbeitung dargestellt werden. Dadurch lassen sich Ansätze zur Optimierung von CNC-Programmdaten. Bei einer endlichen Auflösung (Genauigkeit) der Eingangsdaten sind prinzipbedingt immer Fehler möglich. Die ungenügende Oberflächenqualität der Werkstücke entsteht vor allem aus der geringen Auflösung der Eingangsdaten, die häufig weniger als 1 $\mu$m beträgt. Viele CAD-Systeme liefern die NC-Daten mit höchstens 1$\mu$m Auflösung. Diese geringe Auflösung kann allerdings relativ große Fehler verursachen.

Sehr kleine Punktabstände können bei begrenzter Auflösung stärkere Auswirkungen auf den Bahnverlauf haben als längere Bahnen. Je kürzer die Punktabstände um so größer können die prozentualen Abweichungen von der Idealbahn werden.

Nimmt man z.B. eine maximale Auflösung von 1$\mu$m an, so beträgt der kleinste Punktabstand somit ebenfalls 1$\mu$m.

| Punktabstand in $\mu$m | Winkelversatz in Grad zwischen Ideal- und Fehler-geraden bei 1$\mu$m Fehler | Winkelversatz in Grad zwischen Ideal- und Fehler-geraden bei 0.1$\mu$m Fehler |
|---|---|---|
| 1 | 45 | 6 |
| 2 | 27 | 3 |
| 3 | 18 | 2 |
| 5 | 11 | 1 |
| 10 | 6 | 0.6 |
| 100 | 0.6 | 0.06 |

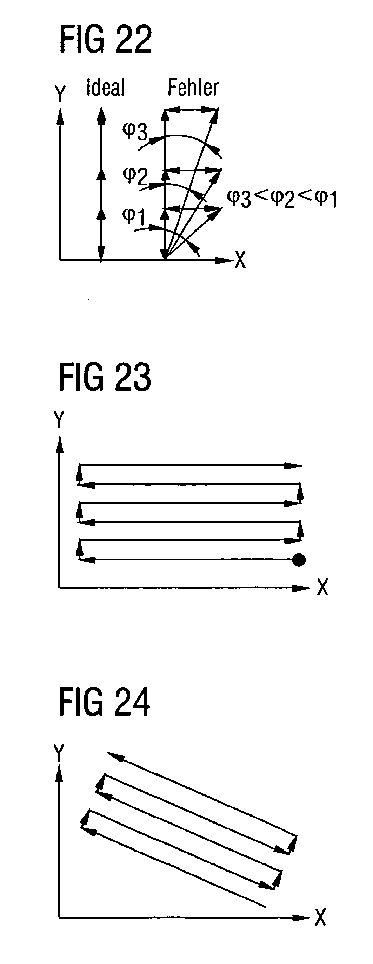

Die FIG 21 veranschaulicht die fehlerhafte Lage eines Punktes bei fester Auflösung und max. 1$\mu$m großem Fehler. In der Darstellung nach FIG 22 ist der Zusammenhang zwischen Bahnlänge und festem Fehler dargestellt. Je kleiner der Abstand zwischen zwei Punkten um so größer ist der Einfluss eines Fehlers bei gegebener Auflösung. Da das Ziel immer eine Fehlerminimierung ist, muss man also die Datenauflösung möglichst hoch setzen.

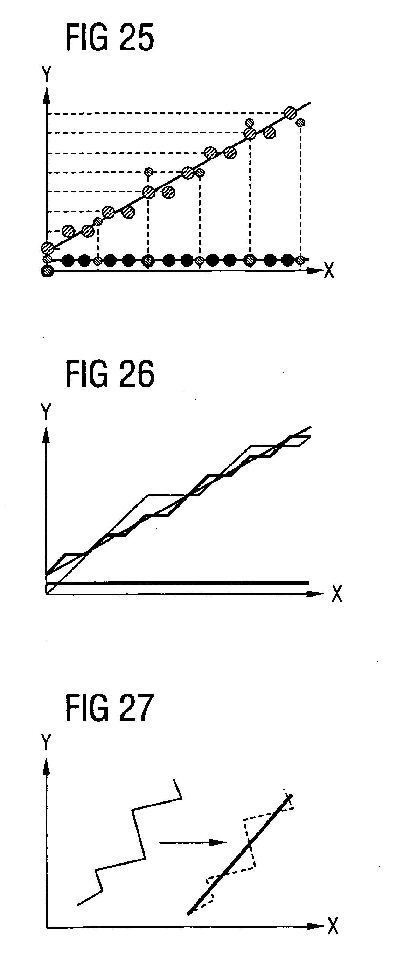

Die Wahl des Bahnverlaufs kann die Oberflächenqualität des Werkstückes maßgeblich beeinflussen (insbesondere bei 2D-Oberflächen). Wählt man einen Bahnverlauf in X-Y-Ebene wie in FIG 23 gezeigt, so ändert sich der Y-Wert nur einmal bei jedem Bahnwechsel. Bei einem schrägen Bahnverlauf gemäß FIG 24 ändert sich der Y-Wert bei jedem Bahnpunkt. Durch geringe Auflösungen können dadurch bei jedem Bahnpunkt Rundungsfehler im X und Y-Wert auftreten. Die Folgen sind in FIG 25 und 26 dargestellt. Die FIG 25 zeigt eine Punktdarstellung der Auswirkungen zu geringer Auflösungen auf schräg verlaufende Bahnen, die FIG 26 eine entsprechende Liniendarstellung. Deutlich sind die unerwünschten Krümmungswechsel erkennbar.

Folgender Vergleich offenbart die Ungenauigkeit, trotz linearer Bahnen:

| Fall 1: Bahnen laufen entlang der X-Achse | | Fall 2: Bahnen laufen in XY-Ebene unter einem Winkel von 30° | | | |
|---|---|---|---|---|---|
| X in $\mu$m | Y in $\mu$m | X in $\mu$m | Y in $\mu$m gerundet auf | | |
| | | | 1$\mu$m | 10$^{-4}\mu$m | Abw. |
| 10 | 10 | 10 | 6 | 5.7735 | + |
| 20 | 10 | 20 | 12 | ... | + |

(fortgesetzt)

| Fall 1: Bahnen laufen entlang der X-Achse | | Fall 2: Bahnen laufen in XY-Ebene unter einem Winkel von 30˚ | | | |
|---|---|---|---|---|---|
| X in $\mu$m | Y in $\mu$m | X in $\mu$m | Y in $\mu$m gerundet auf | | |
| | | | 1$\mu$m | 10$^{-4}\mu$m | Abw. |
| 30 | 10 | 30 | 17 | 11.547 | - |
| 40 | 10 | 40 | 23 | ... | - |
| 50 | 10 | 50 | 29 | 17.320 | + |
| nächste | nächste | nächste | n.B | .... | |
| Bahn | Bahn | Bahn | | 23.094 | + |
| 10 | 20 | 10 | 16 | ... | + |
| 20 | 20 | 20 | 22 | 28.868 | - |
| 30 | 20 | 30 | 27 | ... | - |
| 40 | 20 | 40 | 33 | n.B. | + |
| 50 | 20 | 50 | 39 | 15.773 | |
| | | | | ... | |
| | | | | 21.547 | |
| | | | | ... | |
| | | | | 27.320 | |
| | | | | ... | |
| | | | | 33.094 | |
| | | | | ... | |
| | | | | 38.868 | |
| | | | | ... | |

Je geringer die Auflösung, um so stärker werden die Abweichungen bei einer schräg verlaufenden Bahn. Ein Bahnverlauf entlang der X-Achse bei festem Y-Wert (vgl. FIG 23) wird von dieser Art Fehler nicht beeinflusst (der Bahnverlauf bleibt immer eine Gerade). Bahnverläufe parallel einer Hauptachse sind damit schräg liegenden Bahnverläufen vorzuziehen.

Mit Hilfe der Normalenvektoren kann man sehr gut den Einfluss der Auflösung auf den Bahnverlauf erläutern. Eine geringe Auflösung führt insbesondere bei schräg liegenden Bahnverläufen zu mehr oder weniger starkem Schwanken der einzelnen Geradenstücke um die Idealbahn. Die Normalenvektoren haben deshalb geometrische Lageabweichungen von einigen Graden. Bei entsprechenden Vektorlängen ergeben sich daraus bei einer Darstellung zentrierter Normalenvektoren wie vorangehend beschrieben mehr oder weniger große fleckige Ansammlungen von Punkten.

Sind die Punkte weit verstreut, so bedeutet dies meist eine große Abweichung der Bahnen von ihrer Idealbahn. Hart umrissene Strukturen (kleiner Punktfleck, scharfe Linie aus Punkten) lassen den Rückschluss zu, dass es keine nennenswerten Abweichungen gibt und die zu erwartende Oberfläche sehr gut aussehen müsste.

Sind die Eingangsdaten zu gering aufgelöst, können zu große Abweichungen zwischen Soll- und Istwerten vorliegen. Dies wiederum hat entscheidenden Einfluss auf die Richtung der Normalenvektoren, welches wiederum ein Indiz auf die zu erwartende Oberflächenqualität ist.

Wie weiter oben vorgestellt, lassen sich erfindungsgemäß charakteristische Merkmale der Bahnverläufe mit Hilfe vektorieller Größen erkennen. Die NC-Daten werden nun mit diesen Methoden analysiert. Spezielle Merkmale in den NC-Daten lassen einen Zusammenhang mit der zu erwartenden Oberflächengüte erkennen.

Die Messung von Bahnpunktabständen kann Aufschlüsse über zu eng gesetzte Bahnpunkte geben. Bei einer festgelegten Genauigkeit von z.B. 5$\mu$m sind Bahnabstände von 1,2,3,4 $\mu$m ziemlich unmaßgeblich und führen nur zu großen Datenmengen oder können Verarbeitungsprozesse negativ beeinträchtigen (Bearbeitungsgeschwindigkeit).

Die Berechnung erfolgt anhand jeweils zwei aufeinanderfolgender Datenpunkte dreidimensional nach der Vorschrift:

$$s_{12} = \left| P_2 - P_1 \right| = \sqrt{(x_2 - x_1)^2 + (y_2 - y_1)^2 + (z_2 - z_1)^2} \qquad (9)$$

Falls extrem kleine Bahnpunktabstände auftreten, so muss man entscheiden, ob und in welcher Weise man eingreift. Folgende Möglichkeiten können angewendet werden:

- Punkte ohne weiteres löschen
- Interpolation und Neuabtastung mit größerem Abstand

Die vorgestellten erfindungsgemäßen Methoden erlauben eine Erkennung unterschiedlicher Eigenschaften von NC-Daten. Schwachstellen in den NC-Daten lassen sich auf unterschiedlichen Wegen visuell darstellen und mathematisch berechnen. Die visuellen Verfahren sind voll 3D fähig, d.h. es gibt keine Einschränkung hinsichtlich verschiedener NC-Programme (2D/3D). Selbst komplexe Modelle mit Millionen von Punkten sind schnell und effizient analysiert und mögliche Schwachstellen klar darstellbar.

Die erkennbaren Schwachstellen in den Beispielbildern sind in hohem Maße deckungsgleich mit den Stellen der Werkstückoberflächen, die eine unzureichende Oberflächenqualität besitzen. Es gibt also eine Übereinstimmung zwischen den erfindungsgemäß ermittelten Unregelmäßigkeiten und der Oberflächengüte gefräster Werkstücke.

Dieser Zusammenhang lässt folgende Annahme zu:

Die Korrektur der NC-Daten z.B. durch Glättungsverfahren, mit dem Ziel der Verringerung bekannter Unregelmäßigkeiten im Bahnverlauf (z.B. sich permanent ändernde Krümmungsrichtungen) müsste auch positive Auswirkungen auf die Oberflächengüte der Werkstücke haben.

Nach der Analyse der NC-Programme steht fest, dass Bereiche, in denen die z.B. Normalenvektoren unregelmäßige Richtungen besitzen, Auswirkungen auf die Oberfläche der Werkstücke haben. Es müssen also Wege gefunden werden, die NC-Daten zu verändern (z.B. zu glätten).

Für die Korrektur der NC-Daten gibt es prinzipiell zwei Möglichkeiten:

1. Veränderung der ursprünglichen Datenpunkte
2. Generierung neuer Datenpunkte (Veränderung der Anzahl).

Die Möglichkeit 1 soll hier näher beschrieben werden. Die Möglichkeit 2 baut auf Möglichkeit 1 auf, und stellt eine Art Neuabtastung des Bahnverlaufs dar. Die Umsetzung ist jedoch mit einem höheren Risiko der Datenverfälschung verbunden (E-ckenprobleme beim Ausgleichsspline).

Eine dreidimensionale Oberfläche kann grundsätzlich durch eine Punktmenge dargestellt werden. Jeder Punkt kann hierbei aus einem Wertetriplet (X, Y, Z-Werte) im kartesischen Raum dargestellt werden. Verbindet man die Punkte mit Geraden, so entstehen räumliche Kurven.

Ein interessanter Sonderfall liegt vor, wenn zwei identische Parameter (z.B. X und Y) aller Punkte in einer Ebene liegen. Diese Sonderfälle werden mathematisch folgendermaßen beschrieben:

$$P = (x, y, z); \quad z = f(x, y) \tag{10}$$

Dann ergibt sich die Situation, dass die Fräsbahnen in der XY-Ebene Geraden sind und dass alle Geraden parallel zueinander verlaufen (bis auf die Ränder). Dabei müssen die Geraden nicht parallel zu einer Achse verlaufen, sondern können auch schräg in der Ebene liegen. Die entsprechenden XY-Werte der Ebene können mit zweidimensionalen Algorithmen verarbeiten werden. Diese Wertepaare können z.B. mit vergleichsweise einfachen linearen Lösungsansätzen geglättet werden.

Eine sehr gute Möglichkeit der Glättung von Geraden in der Ebene bietet die lineare Regression. Hierbei werden z.B. die um eine Gerade jitternden XY-Werte in einer Ebene auf eine Gerade gezwungen. Somit erreicht man z.B. eine Glättung der XY-Werte eines Wertetriplets (X, Y, Z).

Liegt die Ursache des nichtlinearen Bahnverlaufes in der Datenauflösung, so sollte man die Datenauflösung erhöhen, da man sonst statt einer Geraden wieder nur einen ungenügenden Bahnverlauf erhält. Die Darstellung nach FIG 27 zeigt eine solche lineare Glättung.

Jitterfehler vom Abtasten gerader Bahnen oder lineare Bahnverläufe mit geringer Auflösung lassen sich hiermit einfach und ohne Parameter glätten. Diese Glättung eignet sich jedoch nur für Datenpunkte, bei denen zwei Koordinatenwerte in einer der drei Hauptebenen liegen und Geraden darstellen.

Des weiteren sind auch Methoden der Ausgleichsrechnung für Glättungszwecke heranziehbar. Dazu gehören auch die sogenannten Splines. Mittels Splines erzeugte Bahnen und Flächen benötigen nur einen Bruchteil der Datenmenge einer vergleichbaren Approximationsdarstellung (Geradenstücke, Dreiecke). Darüber hinaus lassen sich die Verläufe auch noch einfach mittels weniger Parameter (Gewichte) beeinflussen.

Den Vorteil des wesentlich geringeren Datenaufkommens erkauft man sich mit einer gestiegenen Rechenleistung zur Berechnung der Interpolationswerte des Splines. Um z.B. einen Kreis exakt darzustellen, muss dieser mathematisch beschrieben werden. Setzt man ihn aus Punkten zusammen, die durch Geraden verbunden sind, so erreicht man je nach Auflösung und Anzahl der Punkte mehr oder weniger "eckige" Kreise. Diese Approximation durch Geradenstücke führt vor allem bei Vergrößerungen zu sichtbar "eckigen" Kreisen.

Um einen Kreis mit endlicher, hoher Auflösung möglichst glatt erscheinen zu lassen, bedarf es einer hohen Anzahl an Kreispunkten, wenn man den Kreis mit Geradenstücken approximiert (sonst wird er eben zu "eckig").

Mit komplexen Modellen erreicht man dadurch leicht Datenmengen von mehreren hundert Mbytes. Einen Kreis mittels Splines zu erstellen, bedarf nur weniger Datenpunkte (Stützstellen). Die Interpolationswerte (Zwischenwerte) müssen allerdings aus den Datenpunkten berechnet werden. Diesen Kreis kann man nun beliebig vergrößern, ohne weitere Datenpunkte zu benötigen. Je mehr Interpolationswerte man benötigt (z.B. wegen hoher Auflösung), um so größer wird jedoch die Rechenzeit (linear ansteigend). Die Grenzauflösung der Splinekurve ist somit nur durch die Größe des Datenformates begrenzt.

Die klassische Interpolation oder Approximation von Kurven hat zur Aufgabe, eine Funktion $y = f(x)$ durch eine Funktion $y = p(x)$ anzunähern. Im allgemeinen ist es ein Polynom vom Grade n. Es wird weiterhin gefordert, dass die Interpolationsfunktion p und die Funktion f an vorgegebenen Punkten (Stützstellen) übereinstimmen. Mit diesem Ansatz lässt sich die Interpolation im eindimensionalen Fall für n Punkte durch ein Polynom *(n-1)*- ten Grades lösen nach:

$$y = p_{n-1}x^{n-1} + p_{n-2}x^{n-2} + ... + p_1x + p_0 \qquad (11)$$

An den Stützstellen kommt es jedoch häufig zu Überschwingern. Ein polynomer Spline S(t) vom Grad m ist definiert durch:

1. *S(t)* stimmt auf jedem Intervall $[\mu, \mu+1]$ . $\mu \in Z$ mit dem Polynom $p_\mu \in \Pi_m, m \in N$ überein.
2. $S(t) \in C^{m-1}R.$

Drei Fälle sind zu unterscheiden:

Grad m=1: Polygonzug
Grad m=2: Quadratischer Spline
Grad m=3: Kubischer Spline.

Splines müssen gewissen Anschlussbedingungen erfüllen. Dies erfordert die Übereinstimmung des Kurvenverlaufs an der Grenze zweier benachbarter Intervalle $[\mu-1,\mu)$ und $[\mu,\mu+1)$. Je nach Grad m des Splines müssen außer den Funktionswerten an den Intervallgrenzen ebenfalls die Ableitungen identisch sein. Dies kommt der Forderung nach m-maliger stetiger Differenzierbarkeit von *S(t)* gleich.

Betrachtet man die Ableitungen physikalisch, so ist die erste Ableitung äquivalent zur Geschwindigkeit. Unterschiedliche Geschwindigkeiten sind meist unerwünscht, denn damit sind unnötige Brems- oder Beschleunigungsmanöver erforderlich, die negative Auswirkungen auf die Oberflächenqualität der gefrästen Bahn haben können.

Die gleichen Überlegungen beziehen sich auch auf die zweite Ableitung, die physikalisch der Beschleunigung entspricht. Deshalb lauten die Forderungen an den Randstellen:

$$y_i' = y_{i+1}' \qquad \text{und} \qquad y_i'' = y_{i+1}'' \quad . \qquad (12)$$

Kurven im Raum sind meist nicht monoton in ihren X,Y, und/oder Z-Werten. Die Verarbeitung von Splines verlangt nach einem Parameter, der monoton verläuft. Bahnverläufe im Raum sind jedoch meist nicht monoton. Um diese Bedingung zu erreichen, wird nun mittels einer Parametrisierung ein Monotoniebezug hergestellt:

$$P(t) = [x(t), y(t)] \qquad (13)$$

Besonders hilfreich sind dreidimensionale kubische Ausgleichssplines. Dieser Splinetyp hat gegenüber anderen Splines den Vorteil, das er approximierend wirkt. Außerdem ist dieses Verfahren sehr einfach auch mehrdimensional möglich. Somit lässt sich jede parametrische Raumkurve glätten.

Bei der Anwendung müssen jedoch einige Aspekte beachtet werden, da aufgrund der Randbedingungen z.B. keine Ecken erlaubt sind. Die allgemeine Form ergibt sich zu:

$$\begin{pmatrix} S_x(t) \\ S_y(t) \\ S_z(t) \end{pmatrix} \equiv \begin{pmatrix} S_{ix}(t) \\ S_{iy}(t) \\ S_{iz}(t) \end{pmatrix} \equiv \begin{pmatrix} a_{ix} + b_{ix}(t-t_i) + c_{ix}(t-t_i)^2 + d_{ix}(t-t_i)^3 \\ a_{iy} + b_{iy}(t-t_i) + c_{iy}(t-t_i)^2 + d_{iy}(t-t_i)^3 \\ a_{iz} + b_{iz}(t-t_i) + c_{iz}(t-t_i)^2 + d_{iz}(t-t_i)^3 \end{pmatrix} \approx \begin{pmatrix} x(t) \\ y(t) \\ z(t) \end{pmatrix} \qquad (14)$$

$$t_0 = 0, \quad t_{i+1} = t_i + \sqrt{(x_{i+1}-x_i)^2 + (u_{i+1}-u_i)^2 + (v_{i+1}-v_i)^2}$$

Mittels Ausgleichssplines lassen sich beliebige Kurvenformen glätten. Durch Wahl der Gewichte kann einen Splineverlauf mit folgenden Eigenschaften erzeugen:

Gewicht → ∞
Ausgleichsspline verhält sich wie ein kubischer Spline

Gewicht > 0 und < ∞
Ausgleichsspline approximiert je nach Gewichtsstärke

Gewicht → 0
Ausgleichsspline wird zur Ausgleichsgerade (Gauß)

Der Grad der Interpolation wird mittels eines Wichtungswertes (Gewicht) je Stützpunkt festgelegt. Dabei bedeuten höhere Wichtungswerte ein näheres Anschmiegen des Splines an den/die Stützpunkte. Ein Wichtungswert gegen Null erzeugt eine Ausgleichsgerade.
Die Punkte der Eingangsdaten dienen dem Spline als Stützpunkte. Es ergeben sich nun zwei Möglichkeiten der Splinedarstellung:

- man zeichnet nur die Datenpunkte, die auch den Stützstellen entsprechen,
- man interpoliert zwischen den Stützpunkten, und erhält den Splineverlauf.

Der Ausgleichsspline dient in erster Linie nur dazu, die Originalpunkte so zu verändern (Approximation der Stützstellen zu einem glatten Splineverlauf hin), dass

- eine Glättung des Bahnverlaufes erfolgt und
- der Verlauf der Bahn aber möglichst gut erhalten bleibt.

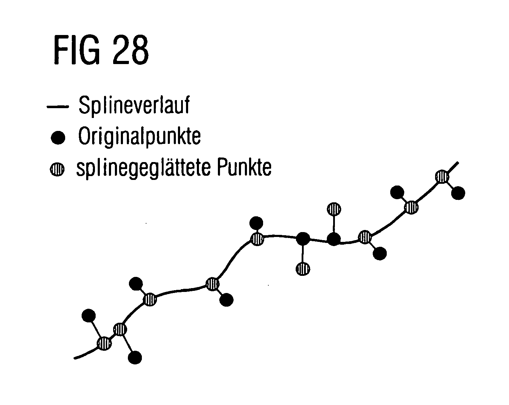

Die Darstellung nach FIG 28 zeigt ein Beispiel eines Splineverlaufs und die damit geglätteten Punkte.
Ausgleichssplines sind $C^2$ stetig (zweimal stetig differenzierbar) und damit lassen sich keine Ecken erzeugen. Da aber nicht der Splineverlauf sondern nur die Splinewerte der Stützstellen (Originalpunkte) benötigt werden, verringert sich das Problem. Leider kann der Eckpunkt dennoch zu weit vom Originalpunkt abweichen (besonders bei kleinen Gewichten).
Die starke Abweichung in den Ecken lässt sich auf folgende Art und Weise beheben:

1. starke lokale Erhöhung des Gewichts der Stützstelle (Eckpunkt)
2. Aufteilung des Ausgleichsspline in mehrere aneinandergrenzende Splines (z.B. von einem Eckpunkt zum Nächsten usw.)

Für extrem stark glättende Splines kann man 1. und 2. auch kombinieren. Der Vorteil besteht zum einen in dem vollständigen Erhalt der Eckwerte und zum anderen in den kleineren Splinegrößen.
Da ein Ausgleichsspline auf die voranstehend dargestellte Weise auch dreidimensional glätten kann, ist die Bedeutung als zweidimensionaler Glättungsalgorithmus von untergeordneter Bedeutung. Die zweidimensionale Vorgehensweise ist jedoch bis auf die dritte Dimension identisch.
Grundsätzlich benötigt man ein Verfahren, dass Wertetriplets (X, Y, Z) glätten kann, für beliebige Kurvenformen im Raum. Aufgrund der erwähnter Probleme mit Splines erfolgt die Glättung der Bahnkurve nur anhand der Stützstel-

EP 1 429 216 B1

lenwerte ohne Zwischenwerte. Ecken bleiben erhalten, wenn der Spline dort endet und wieder neu beginnt. Der Splineverlauf wird nur an den Stützstellen gezeichnet. Zwischen diesen Punkten wird dann eine Linie gezogen. Diese Darstellung ist der splinegeglättete Bahnverlauf.

Um die Wirksamkeit der Glättungsalgorithmen zu belegen, wurden bereits reale Tests durchgeführt. Dabei wurden zwei Modelle hergestellt, einmal mit und einmal ohne Optimierung. Der Vergleich beider Modelle zeigte die Wirksamkeit des erfindungsgemäßen Verfahrens auf eindrucksvolle Weise. Anhand der Modelle lassen sich wiederum bestimmte Glättungsparameter für weitere Verbesserungen anpassen.

Im Folgenden sei noch einmal die wesentliche Vorgehensweise kurz zusammengefasst.

Geometrische Betrachtung:

Die dreidimensionale Ansicht gibt einen ersten Anhaltspunkt über die Form des Werkstückes aufgrund der Punktemenge. Durch zuschaltbare Liniendarstellungen bekommt man einen noch besseren Überblick und kann die Bahnverläufe erkennen.

Zentrierte Normalenvektoransicht:

Nachdem man einen Überblick gewonnen hat, kann man vor allem mittels der zentrierten Normalenvektoransicht die Verteilung der Normalenvektoren analysieren, was manuell oder auch automatisiert möglich ist. Anhand der Strukturen kann man damit erste Aussagen über die Güte erstellen.

Normalenvektoren einblenden:

Neben der zentrierten Darstellung kann man auch die Normalenvektoren direkt am Bahnverlauf einblenden. Hiermit sind lokale Fehler feststellbar.

Pseudo-Oberfläche:

Anhand der Lage der Normalenvektoren kann eine Pseudo-Oberflächenansicht generiert werden. Jeder Bahnabschnitt zwischen zwei Datenpunkten wird in Richtung des ersten Normalenvektors durch ein kleines Flächenstück dargestellt. Der Normalenvektor ist die eine Seite, und die Abstandsgerade zwischen den Punkten die andere Seite der Fläche. Wenn die Normalenvektoren zweier angrenzender Bahnstücke stark unterschiedliche Richtungen haben, so sind die Flächenstücke verdreht. Mittels Lichtreflexion erscheinen Flächen unterschiedlicher Winkellage mit anderer Helligkeit. Diese Helligkeitsschwankungen erlauben ein schnellen Blick über Unregelmäßigkeiten im NC-Programm.

Konkrete Beispiele zur Realisierung der Erfindung anhand einer Software-Implementierung in der Programmiersprache C++ aufbauend auf den frei zugänglichen OpenGL-Routinen zur graphischen Darstellung:

```
OpenGL-Code Punkt- und Liniendarstellung

void CGlsample1Doc::RenderScene_p(void)
{
    if (useVertexArrays)
     {
        glVertexPointer(3, GL_DOUBLE, 0, PS);
        glPushMatrix () ;
            glRotated (phix,1,0,0) ;
            glRotated (phiy,0,1,0) ;
            glRotated (phiz,0,0,1) ;
            glTranslated( -Transl_Mitte_x, -  Transl_Mitte_y, -Transl_Mitte_z);
        glColor3fv(pcolor);
        glDrawArrays(GL_POINTS, 0, maxPoint);
        glPopMatrix () ;
    } else
    {
        glPushMatrix();
            glRotated (phix,1,0,0) ;
            glRotated(phiy,0,1,0) ;
            glRotated (phiz,0,0,1) ;
            glTranslated( -Transl_Mitte_x, -
```

```
Transl_Mitte_y, -Transl_Mitte_z);
            glBegin(GL_POINTS);
                glColor3fv(pcolor);
                for (long i=0;i<maxPoint;i++)
                    glVertex3dv(PS[i]);
            glEnd () ;
        glPopMatrix();
    }
}


void CGlsamplelDoc::RenderScene_1(void)
{
    if (useVertexArrays)
    {
        glVertexPointer(3, GL_DOUBLE, 0, PS);
        glPushMatrix () ;
            glRotated (phix,1,0,0) ;
            glRotated (phiy,0,1,0) ;
            glRotated (phiz,0,0,1);
            glTranslated(-Transl_Mitte_x, -
Transl_Mitte_y, -Transl_Mitte_z);
            glColor3f (0.5f, 0.5f, 0.5f);
            glDrawArrays(GL_LINE_STRIP, 0, maxPoint);
        glPopMatrix();
    } else
    {
        glPushMatrix();
            glRotated(phix,1,0,0);
            glRotated(phiy,0,1,0):
            glRotated(phiz,0,0,1);
            glTranslated( -Transl_Mitte_x, -
Transl_Mitte_y, -Transl_Mitte_z);
            glBegin(GL_LINE_STRIP);
                glColor3f(0.5f, 0.5f, 0.5f);
                for (long i=0;i<maxPoint;i++)                        glVertex3dv(PS[i]);
            glEnd ( ) ;
        glPopMatrix();
    }
}


OpenGL-Code der pseudo Oberflächendarstellung

void CGlsample1Doc::RenderQuads(double* QP, double* QPN)
{
    glEnable(GL_LIGHTING);
    glEnable(GL_NORMALIZE);

    GLfloat WhiteSurface[] = {0.5f, 0.5f, 0.5f, 1.0f};
    GLfloat LightAmbient[] = {0.2f, 0.2f, 0.2f, 1.0f };

    glLightfv(GL_LIGHT0, GL_AMBIENT, LightAmbient);
    glEnable(GL_LIGHT0);
    glLightModeli(GL_LIGHT_MODEL_TWO_SIDE, (int)Light2side):
    if (useVertexArrays)
     {
        glVertexPointer(3, GL_DOUBLE, 0, QP);
        glEnableClientState(GL_NORMAL_ARRAY);
        glNormalPointer(GL_DOUBLE, 0, QPN);
        glMaterialfv(GL_FRONT_AND_BACK, GL_AMBIENT, White-
Surface);
        glPushMatrix();
            glRotated(phix,1,0,0);
            glRotated(phiy,0,1,0);
```

```
            glRotated (phiz,0,0,1) ;
            glTranslated( -Transl_Mitte_x, -
Transl_Mitte_y, -Transl_Mitte_z);
            glDrawArrays(GL_QUADS, 0, (maxPoint-1)*4);
        glPopMatrix();
        glDisableClientState(GL_NORMAL_ARRAY);
    }
    else
    {
        glMaterialfv(GL_FRONT_AND_BACK, GL_AMBIENT, White-
Surface);
        glPushMatrix();
            glRotated (phix,1,0,0) ;
            glRotated (phiy,0,1,0);
            glRotated(phiz,0,0,1):
            glTranslated(-Transl_Mitte_x, -
Transl_Mitte_y, -Transl_Mitte_z);
            glBegin(GL_QUADS);
                for (long i=0; i<(maxPoint-1);i++)
                {
                    glVertex3dv(QP +12*i);
                    glVertex3dv(QP +12*i+3);
                    glVertex3dv(QP +12*i+6);
                    glVertex3dv(QP +12*i+9);
                }
            glEnd () ;
        glPopMatrix();
    }
    glLightModeli(GL_LIGHT_MODEL_TWO_SIDE,0);
    glDisable(GL_LIGHT0);
    glDisable(GL_LIGHTING);
    glDisable(GL_NORMALIZE);
}
```

**Patentansprüche**

1. Verfahren zur Darstellung und/oder Untersuchung einer Oberflächengüte eines zu fertigenden Werkstückes anhand von zur Bearbeitung dienenden CNC-Programmdaten, wobei diese Programmdaten eine oberflächenbeschreibende Punktmenge (X, Y, Z) umfassen, die Bahnpunkte (P1...Px) von Raumkurven beschreibt, **dadurch gekennzeichnet, dass** für eine Mehrzahl von benachbarten Bahnpunkten die zugehörigen Winkelhalbierenden-Vektoren (W) ermittelt und dargestellt werden und wobei Bereiche hoher Oberflächengüte durch in die gleiche Richtung gerichtete Winkelhalbierenden-Vektoren (W) signalisiert werden, wohingegen Ungenauigkeiten der resultierenden Oberfläche durch in abweichende Richtungen zeigende Winkelhalbierenden-Vektoren (W) signalisiert werden, wobei ein Winkelhalbierenden-Vektor (W) ermittelt wird, indem aus drei aufeinanderfolgenden Bahnpunkten (P1, P2, P3) zwei Vektoren (V1, V2) gebildet werden und der Normalenvektor (N; N1...Nx) eines mittleren Bahnpunktes (P2) jeweils als Vektorprodukt senkrecht auf einer durch die beiden Vektoren (V1, V2) aufgespannten Ebene angeordnet wird und dieser Normalenvektor (N; N1...Nx) um einen Winkel von 90 Grad so in die Ebene gedreht wird, dass der Winkelhalbierenden-Vektor (W) in halbem Winkel zwischen den beiden Vektoren (V1, V2) liegt.

2. Verfahren zur Darstellung und/oder Untersuchung einer Oberflächengüte nach Anspruch 1, **dadurch gekennzeichnet, dass** ein Normalenvektor (N; N1...Nx) einseitig oder beidseitig der Bahnachse entlang des Bahnverlaufs bis zu einem der benachbarten Bahnpunkte flächenhaft verlängert dargestellt wird.

3. Verfahren zur Darstellung und/oder Untersuchung einer Oberflächengüte nach einem der vorangehenden Ansprüche, **da-durch gekennzeichnet, dass** die Bereiche von Ungenauigkeiten der resultierenden Oberfläche durch Einfärbung der jeweiligen signalisierenden Punkte oder Linien oder Flächen markiert werden.

4. Verfahren zur Untersuchung und Optimierung der Oberflächengüte, wobei diese Oberfläche nach einem der vorangehenden Ansprüche analysiert wird, **dadurch gekennzeichnet, dass** die zugrunde liegenden CNC-Programmdaten solange manipuliert werden, bis die meisten oder alle Normalenvektoren (N; N1...Nx) oder Winkelhalbierenden-Vektoren (W) auf der Raumbahn in gleicher Richtung liegen.

**5.** Verfahren zur Untersuchung und Optimierung der Oberflächengüte nach Anspruch 4, **dadurch gekennzeichnet, dass** eine Manipulation der CNC-Programmdaten durch Veränderung der ursprünglichen Datenpunkte erfolgt.

**6.** Verfahren zur Untersuchung und Optimierung der Oberflächengüte nach Anspruch 4, **dadurch gekennzeichnet, dass** eine Manipulation der CNC-Programmdaten durch Generierung zusätzlicher Datenpunkte erfolgt, insbesondere durch eine Neuabtastung des Raumbahnverlaufs.

**7.** Verfahren zur Untersuchung und Optimierung der Oberflächengüte nach Anspruch 5, **dadurch gekennzeichnet, dass** eine Veränderung der ursprünglichen Datenpunkte durch eine Glättung des Raumbahnverlaufs erfolgt.

**8.** Verfahren zur Untersuchung und Optimierung der Oberflächengüte nach Anspruch 7, **dadurch gekennzeichnet, dass** eine Glättung des Raumbahnverlaufs durch lineare Regression über mehrere benachbarte Bahnpunkte (P1...Px) erfolgt, sofern die Raumkurve auf wenigstens eine Ebene reduzierbar ist.

**9.** Verfahren zur Untersuchung und Optimierung der Oberflächengüte nach Anspruch 7, **dadurch gekennzeichnet, dass** eine Glättung des Raumbahnverlaufs durch einen zweidimensionalen Ausgleichsspline über mehrere benachbarte Bahnpunkte (P1...Px) erfolgt, sofern die Raumkurve auf wenigstens eine Ebene reduzierbar ist.

**10.** Verfahren zur Untersuchung und Optimierung der Oberflächengüte nach Anspruch 7, **dadurch gekennzeichnet, dass** eine Glättung des Raumbahnverlaufs durch einen dreidimensionalen Ausgleichsspline über mehrere benachbarte Bahnpunkte (P1...Px) erfolgt.

**11.** Verfahren zur Untersuchung und Optimierung der Oberflächengüte nach einem der Ansprüche 7 bis 10, wobei erforderlichenfalls eine Erhöhung der Datenauflösung der Bahnpunkte (P1...Px) einer Raumkurve erfolgt.

**Claims**

**1.** Method for displaying and/or examining a surface quality of a workpiece to be machined based on CNC program data used for said machining, with this program data including a set of points (X, Y, Z) describing the surface, with the set of points describing path points (P1...Px) along the path of space curves,
**characterised in that**
the associated angle-bisecting vectors (W) are determined and represented for a plurality of adjacent path points and surface regions having a high surface quality are indicated by angle-bisecting vectors (W) pointing in the same direction; consequently flaws in the resulting surface are shown by angle-bisecting vectors pointing in different directions, with an angle-bisecting vector (W) being determined by forming two vectors (V1, V2) from three consecutive path points (P1, P2, P3) and the normal vector (N; N1... Nx) of an intermediate path point (P2) is arranged in each instance as a vector product perpendicular on a plane spanned by the two vectors (V1, V2) and this normal vector (N; N1...Nx) is rotated by an angle of 90 degrees into the plane so that the angle-bisecting vector (W) is located at a half angle between the two vectors (V1, V2).

**2.** Method for displaying and/or examining a surface quality according to claim 1,
**characterised in that**
a normal vector (N; N1...Nx) is shown in the form of an extended surface that extends to one of the adjacent path points on one or both sides of the path axis along the path.

**3.** Method for displaying and/or examining a surface quality according to one of the preceding claims,
**characterised in that**
the areas of the resulting surface with flaws are marked by colouring the respective points or lines or surfaces.

**4.** Method for examining and optimizing the surface quality, with this surface being analysed according to one of the preceding claims,
**characterised in that**
the underlying CN program data is manipulated until most or all normal vectors (N; N...Nx) or angle-bisecting vectors (W) on the three-dimensional path point in the same direction.

**5.** Method for examining and optimizing the surface quality according to claim 4,
**characterized in that**
the CNC program data is manipulated by changing the original data points.

**6.** Method for examining and optimizing the surface quality according to claim 4,
**characterized in that**
the CNC program data can be manipulated by generating additional data points, in particular by performing a new scan of the three-dimensional path.

**7.** Method for examining and optimizing the surface quality according to claim 5,
**characterized in that**
the original data points are altered by smoothing the three-dimensional path.

**8.** Method for examining and optimizing the surface quality according to claim 7,
**characterized in that**
the three-dimensional path can be smoothed by linear regression over several adjacent path points (P1...Px) provided the space curve can be reduced on at least one plane.

**9.** Method for examining and optimizing the surface quality according to claim 7,
**characterized in that**
the three-dimensional path can be smoothed by a two-dimensional compensation spline extending over several adjacent path points (P1...Px), provided the space curve can be reduced on at least one plane.

**10.** Method for examining and optimizing the surface quality according to claim 7,
**characterised in that**
the three-dimensional path can be smoothed by a three-dimensional compensation spline over several adjacent path points (P1...Px) .

**11.** Method for examining and optimizing the surface quality according to one of claims 7 to 10,
with the data resolution of the path points (P1...Px) of a space curve being optionally increased.


**Revendications**

**1.** Procédé de représentation et/ou d'analyse d'une qualité de surface d'une pièce à fabriquer à l'aide de données de programme CNC, c'est-à-dire de machines-outils à commande numérique, servant à l'usinage, ces données de programme comprenant un ensemble de points (X, Y, Z) de description de surface qui décrit des points de trajectoire (P1 à Px) de courbes spatiales, **caractérisé par le fait que**, pour plusieurs points de trajectoire voisins, on détermine et représente les vecteurs bissecteurs (W) associés, des zones de haute qualité de surface étant signalées par des vecteurs bissecteurs (W) dirigés dans la même direction tandis que des imprécisions de la surface résultante sont signalées par des vecteurs bissecteurs (W) dirigés dans des directions différentes, un vecteur bissecteur (W) étant déterminé en formant deux vecteurs (V1, V2) à partir de trois points de trajectoire consécutifs (P1, P2, P3), en plaçant le vecteur normal (N ; N1 à Nx) d'un point de trajectoire moyen (P2) à chaque fois comme produit vectoriel perpendiculairement à un plan passant par les deux vecteurs (V1, V2) et en tournant d'un angle de 90˚ ce vecteur normal (N ; N1 à Nx) dans le plan de telle sorte que le vecteur bissecteur (W) se trouve à la moitié de l'angle entre les deux vecteurs (V1, V2).

**2.** Procédé de représentation et/ou d'analyse d'une qualité de surface selon la revendication 1, **caractérisé par le fait que** l'on représente un vecteur normal (N ; N1 à Nx) prolongé en surface d'un côté ou des deux côtés de l'axe de trajectoire le long de l'allure de trajectoire jusqu'à l'un des points de trajectoire voisins.

**3.** Procédé de représentation et/ou d'analyse d'une qualité de surface selon l'une des revendications précédentes, **caractérisé par le fait que** l'on marque les zones d'imprécisions de la surface résultante en mettant en couleurs les points ou lignes ou surfaces réalisant respectivement la signalisation.

**4.** Procédé d'analyse et d'optimisation de la qualité de surface, cette surface étant analysée selon l'une des revendications précédentes, **caractérisé par le fait que** l'on manipule les données de programme CNC de base jusqu'à ce que la plupart ou la totalité des vecteurs normaux (N ; N1 à Nx) ou des vecteurs bissecteurs (W) sur la trajectoire spatiale se trouvent dans la même direction.

**5.** Procédé d'analyse et d'optimisation de la qualité de surface selon la revendication 4, **caractérisé par le fait que** l'on effectue une manipulation des données de programme CNC en modifiant les points de données initiaux.

**6.** Procédé d'analyse et d'optimisation de la qualité de surface selon la revendication 4, **caractérisé par le fait que** l'on effectue une manipulation des données de programme CNC en produisant des points de données supplémentaires, notamment grâce à un nouvel échantillonnage de l'allure de trajectoire spatiale.

**7.** Procédé d'analyse et d'optimisation de la qualité de surface selon la revendication 5, **caractérisé par le fait que** l'on effectue une modification des points de données initiaux en lissant l'allure de trajectoire spatiale.

**8.** Procédé d'analyse et d'optimisation de la qualité de surface selon la revendication 7, **caractérisé par le fait que** l'on effectue un lissage de l'allure de trajectoire spatiale par le biais d'une régression linéaire sur plusieurs points de trajectoire voisins (P1 à Px) dans la mesure où la courbe spatiale peut être réduite à au moins un plan.

**9.** Procédé d'analyse et d'optimisation de la qualité de surface selon la revendication 7, **caractérisé par le fait que** l'on effectue un lissage de l'allure de trajectoire de surface par le biais d'une fonction spline de compensation bidimensionnelle sur plusieurs points de trajectoire voisins (P1 à Px) dans la mesure où la courbe spatiale peut être réduite à au moins un plan.

**10.** Procédé d'analyse et d'optimisation de la qualité de surface selon la revendication 7, **caractérisé par le fait que** l'on effectue un lissage de l'allure de trajectoire de surface par le biais d'une fonction spline de compensation tridimensionnelle sur plusieurs points de trajectoire voisins (P1 à Px).

**11.** Procédé d'analyse et d'optimisation de la qualité de surface selon l'une des revendications 7 à 10, une augmentation de la résolution de données des points de trajectoire (P1 à Px) d'une courbe spatiale étant effectuée si nécessaire.

## FIG 1

## FIG 2

| CAD Konstruktion |
|---|

| Werkstückmodell |
|---|

| NCP (Präprozessor) | | Spline-Format |
|---|---|---|

| NC-Programm |
|---|

| NC-Steuerung |
|---|

zukünftig

| Führungsgrößen |
|---|

| Maschinenantriebe |
|---|

FIG 3

FIG 4

FIG 5

## FIG 6

## FIG 7

## FIG 8

## FIG 9

FIG 10

FIG 11

**FIG 12**

**FIG 13**

FIG 14

FIG 15

FIG 16

FIG 17

FIG 18

FIG 19

## FIG 20

## FIG 21

- ● Originalpunkt
- ◎ 1μm Fehler
- ←→ 1μm

EP 1 429 216 B1

**FIG 22**

**FIG 23**

**FIG 24**

**FIG 25**

**FIG 26**

**FIG 27**

# FIG 28

— Splineverlauf
● Originalpunkte
◍ splinegeglättete Punkte

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0276312 A1